(19) Europäisches Patentamt
European Patent Office
Office européen des brevets

(11) **EP 1 648 082 B1**

(12) **EUROPÄISCHE PATENTSCHRIFT**

(45) Veröffentlichungstag und Bekanntmachung des Hinweises auf die Patenterteilung:
**10.09.2008 Patentblatt 2008/37**

(51) Int Cl.:
***H02P 21/14*** *(2006.01)*

(21) Anmeldenummer: **05107012.6**

(22) Anmeldetag: **29.07.2005**

(54) **Verfahren und Einrichtung zur Leistungsregelung von permanent erregten elektrischen Synchronmaschinen**

Method and device for controlling the power of permanent excited electrical synchronous machines

Procédé et appareil pour commander la puissance de machines électriques synchrones à excitation par aimant permanents

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **02.08.2004 DE 102004037378**

(43) Veröffentlichungstag der Anmeldung:
**19.04.2006 Patentblatt 2006/16**

(73) Patentinhaber: **SIEMENS AKTIENGESELLSCHAFT**
**80333 München (DE)**

(72) Erfinder: **Geil, Günter**
**28277, Bremen (DE)**

(56) Entgegenhaltungen:
**US-B1- 6 592 412**

- **PATENT ABSTRACTS OF JAPAN Bd. 1998, Nr. 13, 30. November 1998 (1998-11-30) -& JP 10 229700 A (MEIDENSHA CORP), 25. August 1998 (1998-08-25)**
- **PATENT ABSTRACTS OF JAPAN Bd. 1997, Nr. 04, 30. April 1997 (1997-04-30) -& JP 08 331900 A (MEIDENSHA CORP), 13. Dezember 1996 (1996-12-13)**
- **PATENT ABSTRACTS OF JAPAN Bd. 010, Nr. 042 (E-382), 19. Februar 1986 (1986-02-19) -& JP 60 197181 A (YASUKAWA DENKI SEISAKUSHO KK), 5. Oktober 1985 (1985-10-05)**

**Beschreibung**

Die Erfindung betrifft ein Verfahren und eine Einrichtung zur Leistungsregelung von permanent erregten elektrischen Synchronmaschinen mit vorgebbarer Drehzahl, in denen durch einen Maschinenstrom und einen durch Permanentmagnete erzeugten magnetischen Fluss ein Drehmoment erzeugt wird, das von der Stärke des magnetischen Flusses und der Größe des Maschinenstroms sowie einer Maschinenkonstante abhängt, wobei der Maschinenstrom und die Drehzahl der Maschine geregelt werden.

Bei einer elektrischen Maschine gibt es zwischen dem Strom, dem magnetischen Fluss und dem Drehmoment den bekannten Zusammenhang:

$$c \times I_s \times \Phi = M.$$

Darin bedeuten:

$c$ = eine Maschinenkonstante,
$I_s$ = der Maschinenstrom,
$\Phi$ = der Maschinenfluss und
$M$ = das Drehmoment.

Bei elektrisch erregten Synchronmaschinen kann eine Regelung über den Erregerstrom in Feldspulen der Maschine den magnetischen Fluss in der Maschine regeln. Mit solch einer Regelung ist der magnetische Fluss in der Maschine bekannt. Bei Vorgabe eines bestimmten Maschinenstromes ist als Folge das sich in der Maschine einstellende Drehmoment bekannt. Permanent erregte Synchronmaschinen haben dagegen auf dem Polrad keine Feldspulen, über die der magnetische Fluss in der Maschine geregelt werden könnte. Der magnetische Fluss in der Maschine wird im wesentlichen über die Permanentmagnete erzeugt und das magnetische Verhalten der Permanentmagnete ist temperaturabhängig. Der magnetische Fluss in der Maschine ist daher auch von der Temperatur der Magnete abhängig. Bei Vorgabe eines bestimmten Maschinenstromes ist das in der Maschine sich einstellende Drehmoment also auch abhängig von der Temperatur der Magnete und die permanent erregte Synchronmaschine kann über den Maschinenstrom nicht mehr genau drehmomentgeregelt werden. Wenn die permanent erregte Synchronmaschine über den Maschinenstrom nicht mehr genau drehmomentgeregelt gefahren werden kann, kann diese Maschine aber auch nicht über den Maschinenstrom und die Maschinendrehzahl leistungsgeregelt gefahren werden. Eine genaue Leistungsregelung ist aber für viele Anwendungen erforderlich, insbesondere für die Anwendung der permanent erregten Synchronmaschine als Schiffsantriebsmaschine.

Es ist Aufgabe der Erfindung, ein Regelverfahren und eine Regeleinrichtung anzugeben, mit denen trotz der vorstehend beschriebenen Zusammenhänge eine genaue Leistungsregelung von permanent erregten elektrischen Schiffsantriebsmaschinen, insbesondere in der Form von elektrischen Ruderpropellern, möglich ist.

Aus dem allgemeinen Stand der Regelungstechnik von elektrischen Maschinen ist es bekannt, den Maschinenfluss über Hall-Sonden zu erfassen. Ein mit Hall-Sonden oder anderen Messaufnehmern gemessener Maschinenfluss kann zusammen mit dem Maschinenstrom für eine Drehmoment- und damit für eine Leistungsregelung genutzt werden. Auch die direkte Messung des Drehmoments, z.B. über Torsionswellen, ist bekannt. Die aus dem Stand der Technik bekannten Messsysteme sind jedoch sehr aufwendig oder nicht langzeitstabil. Darüber hinaus sind sie empfindlich und daher für große Schiffsantriebsmaschinen, die zuverlässig lange Jahre ihren Dienst tun müssen, weniger geeignet.

Es ist weiterhin eine Regelung über sogenannte Maschinenmodelle bekannt, z.B. in JP 10 229 700, bei denen aus der gemessenen Maschinenspannung, dem gemessenen Maschinenstrom und einer Reihe von Maschinenparametern der Maschinenfluss ermittelt und einer Umrichterregelung aufgegeben wird. Die Praxis hat aber gezeigt, dass diese Art von Maschinenflussermittlung zu unspezifisch für die Erfassung des Drehmomentes in der Maschine ist, um den Anforderungen für Schiffsantriebsmaschinen, bei denen es auf eine genaue Einstellung der Wirkleistung ankommt, gerecht zu werden. Eine feldorientierte Regelung von permanentmagnet-erregten synchronmaschinen für Schiftsantriebe wird in US 6592412 beschrieben.

Insbesondere die Temperaturabhängigkeit der Permanentmagnete kann über Maschinenmodelle nur unzureichend genau geregelt werden.

Die Aufgabe der genauen Leistungsregelung von permanent erregten elektrischen Synchronmaschinen wird dadurch gelöst, dass zur Berücksichtigung der gegebenen Temperaturabhängigkeit des von den Permanentmagneten erzeugten magnetischen Flusses zur Verbesserung der Leistungsregelung ein spezifischer Drehmomentausgleichswert verwendet wird. So ergibt sich eine Softwarelösung, die insbesondere für große Schiffsantriebsmaschinen besonders geeignet ist. Besonders vorteilhaft ist dabei, dass eine Zugänglichkeit der großen Schiffsantriebsmaschinen nicht mehr gegeben sein muss, z.B. um Drehmomentmessgeräte oder Maschinenflussmessgeräte nachjustieren oder reparieren zu können. Vorteilhaft ergibt sich also eine Lösung, die robust und langzeitstabil und damit schiffsgerecht ist.

Die erfindungsgemäße Lösung ist insbesondere für die Antriebsmaschinen von elektrischen Ruderpropellern mit Permanenterregung vorteilhaft, da hier eine genaue Einstellung der Antriebsleistung der mit den Ruderpropellern ausgerüsteten Schiffe nicht möglich ist. Man ist also darauf angewiesen, derartige Antriebsmaschinen größer zu dimensionieren als es an und für sich notwendig wäre, da bisher kein genaues Verfahren und eine entsprechende Einrichtung zur genauen Leistungsregelung zur Verfügung stand. Diese Überdimensionierung soll vermieden werden können. Die gestellten Aufgaben werden durch die Merkmale der Ansprüche 1 und 4 gelöst. Vorteilhafte Ausgestaltungen beschreiben die davon abhängigen Unteransprüche.

In einer besonders vorteilhaften Ausgestaltung der Erfindung ist vorgesehen, dass in einer Regeleinrichtung der elektrischen Maschine mit Regelkreisen über den Drehmomentausgleichswert ein innerer und äußerer Drehzahlregelkreis miteinander verknüpft werden. Derart ergibt sich die vorteilhafte Möglichkeit einer regeltechnischen Lösung für die notwendige Verknüpfung der verwendeten Softwareregler darüber, dass die Begrenzung des Drehmomenten- oder des Leistungssollwertes über den spezifischen Drehmomentausgleichswert unverzögert mit dem Maschinenstromsollwert verbunden werden kann, der momentbildend dem Drehmomentsollwert entspricht. Innerhalb der Regeleinrichtung ergibt sich damit die Beziehung

$$c \times I_s \times (ST \times \Phi) = M.$$

Darin bedeuten:

c = die Maschinenkonstante,
$I_s$ = der Maschinenstrom,
ST = der Drehmomentausgleichswert,
$\Phi$ = der Maschinenfluss und
M = das entstehende Drehmoment.

Der Drehmomentausgleichswert wird vorteilhaft aus Sicherheitsgründen auf den betriebsüblichen Wertebereich begrenzt. Weiterhin wird seine Eingabe geglättet, damit dynamische Vorgänge bei den Signalen für die Erfassung des spezifischen Drehmomentes sich nicht auf die Drehzahlregelung auswirken können. Bei großen, permanent erregten Synchronmaschinen, wie sie Schiffsantriebsmaschinen darstellen, liegt die Zeitkonstante für die Magnettemperatur im Bereich von 20 Minuten und länger. Als einfachste Glättungsfunktion bietet sich vorteilhaft die PT1-Funktion mit 2 Minuten Glättungszeitkonstante an. Die störenden dynamischen Vorgänge elektrischen oder mechanischen Ursprungs bei den Signalen für die Erfassung des spezifischen Drehmomentes sind damit ausreichend geglättet, während das von dem Temperaturverlauf der Permanentmagnete abhängige spezifische Drehmoment kaum beeinflusst wird.

In weiterer Ausgestaltung der Erfindung ist vor-gesehen, dass der spezifische Drehmomentausgleichs-wert aus dem Maschinenstromsollwert, der elektrischen Leistung, dem Wirkungsgrad und der Drehzahl als Hauptgrößen ermittelt wird. Der Maschinenstrom, die elektrische Leistung und die Drehzahl können genau gemessen werden, z.B. in einem Stromrichter zur Speisung der Maschine oder durch einen Winkelschrittgeber. So ergibt sich vorteilhaft die Möglichkeit einer genauen Ermittlung des Drehmomentausgleichswerts durch übliche Messungen.

In einer weiteren, alternativen Ausgestaltung der Erfindung ist vorgesehen, dass das Maschinendrehmoment durch weitere gemessene Größen, z.B. einen Drehmomentistwert oder den Maschinenflussistwert, aber auch durch die Magnettemperatur geführt wird. So kann vorteilhaft die Genauigkeit der Vorgabe unter Berücksichtigung von weiteren wichtigen Größen der Maschine erhöht werden.

In Ausgestaltung der Erfindung ist vorgesehen, dass zur Durchführung des Verfahrens die Einrichtung zur Leistungsregelung der permanent erregten Synchronmaschine einen inneren und einen äußeren Drehzahlregelkreis aus Softwarebausteinen aufweist, die über einen einstellbaren Drehmomentausgleichswert miteinander verbunden sind. So ist das erfindungsgemäße Verfahren vorteilhaft durchführbar.

In weiterer Ausgestaltung der Erfindung ist vorteilhaft vorgesehen, dass der einstellbare Drehmomentausgleichswert nach vorgegebenen Maschinen- und Verwendungsparametern einstellbar ist, z.B. entsprechend der gewünscht Wirkleistung. So kann für Schiffe, für die die Wirkleistung an der Propellerwelle ein entscheidendes Abnahmekriterium ist, die optimale Maschinenleistung eingestellt werden.

In einer alternativen Ausgestaltung der Erfindung ist vorgesehen, dass das Drehmoment der Maschine mittels gemessener Größen, wie Maschinenflussistwert und gegebenenfalls Magnettemperatur, einstellbar ist. So kann die Optimierung der Regelung gegebenenfalls noch verbessert werden, ohne dass empfindliche Sensoren, wie Torsionsmesswellen, eingesetzt werden müssen.

In vorteilhafter Ausgestaltung der Erfindung ist vorgesehen, dass die Regeleinrichtung einen inneren Regelkreis mit einem Drehzahlregler mit den Regelgrö-ßen Drehzahlsollwert vor Hochlaufgeber, Drehzahlsoll-wert nach Hochlaufgeber, Drehzahlistwert und Maschinenstromsollwert aufweist. So ist ein erfindungsgemäßer innerer Regelkreis bildbar, wobei Hochlaufgeber prinzipiell bekannt sind, z.B. aus der DE 100 11 601 C2. Durch die Benutzung eines derartigen Hochlaufgebers kann auf die Verhältnisse des jeweiligen Schiffsantriebs eingegangen werden. Die Parametrierung des Hochlaufgebers geschieht dabei vorteilhaft während der Inbetriebsetzungsphase.

In weiterer Ausgestaltung der Erfindung ist vorgesehen, dass die Regeleinrichtung einen äußeren Regelkreis mit den Regelgrößen Drehzahlistwert, Begrenzung der Maschinenwirkleistung und Begrenzung des Maschinendrehmoments, aufweist. So ergibt sich ein sicheres Arbeiten der erfindungsgemäß geregelten elektrischen Maschine, insbesondere einer permanent erregten Synchronmaschine.

In weiterer Ausgestaltung der Erfindung ist vorgesehen, dass der Hochlaufgeber eine Hochlaufgebernachführung aufweist. So ergibt sich ein besonders vorteilhaftes Verhalten der Regelung.

Es ist schließlich vorgesehen, dass das Ausgangssignal des Drehzahlreglers der Maschinenstromsollwert ist. So ergibt sich eine besonders einfache und für das Maschinenpersonal besonders leicht nachvollziehbare Ausbildung der Stromregelung.

Die Erfindung wird anhand von Zeichnungen näher erläutert, aus denen, ebenso wie aus den Unteransprüchen, weitere, auch erfindungswesentliche, Einzelheiten ersichtlich sind.

Es zeigen:

    FIGUR 1 ein detailliertes Regelschema und
    FIGUR 2 eine schematische Darstellung des Regelvorgangs.

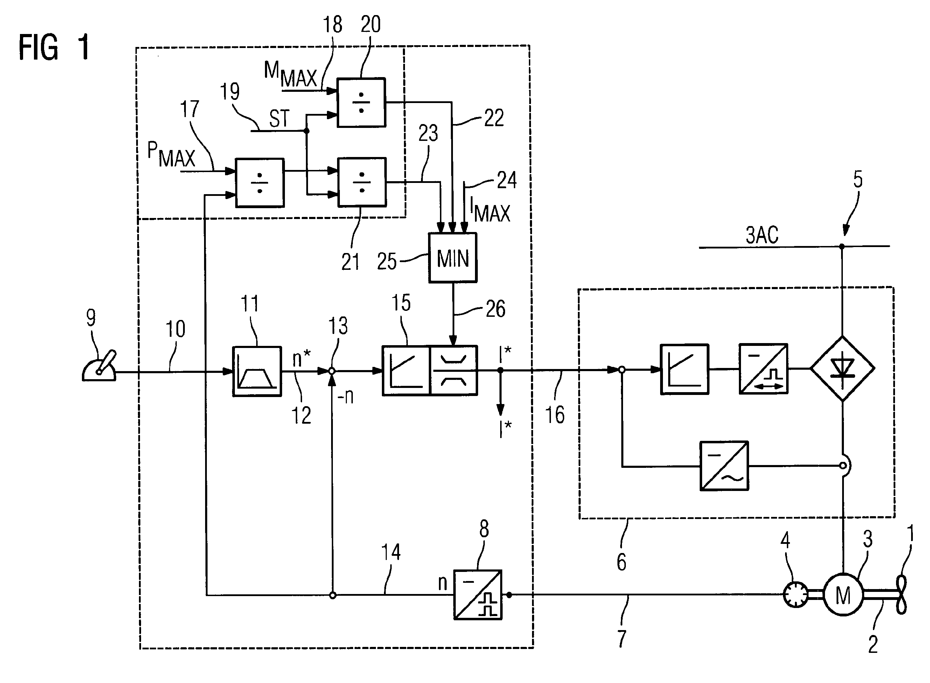

In FIGUR 1 bezeichnet 1 den Schiffspropeller mit der Antriebswelle 2, die sowohl eine im Schiff selbst angeordnete Welle als auch eine in einem elektrischen Ruderpropeller angeordnete Welle sein kann. 3 bezeichnet den Antriebsmotor, vorzugsweise eine permanent erregte Synchronmaschine. 4 bezeichnet einen Winkelschrittgeber zur genauen Drehzahlermittlung. 5 bezeichnet das elektrische Versorgungsnetz des Schiffes und 6 den Stromrichter, in dem der Maschinenstromistwert erzeugt wird.

7 bezeichnet den Drehzahlistwert, der vom Winkelschrittgeber abgegeben wird und der Drehzahlistwerterfassung 8 aufgegeben wird. 9 bezeichnet den Drehzahlsollwertgeber in Form eines Fahrhebels. 10 bezeichnet den Drehzahlsollwert vor dem Hochlaufgeber 11 und 12 den Drehzahlsollwert hinter dem Hochlaufgeber. 13 bezeichnet den Vergleichspunkt von Drehzahlsollwert und Drehzahlistwert, dem der Drehzahlistwert 14 eingegeben wird.

15 bezeichnet einen Drehzahlregler mit Begrenzung des Ausgangswertes und 16 den Maschinenstromsollwert. 17 ist der Begrenzungssollwert Maschinenleistung und 18 der Begrenzungssollwert des Drehmoments, dessen Größe schiffsspezifisch vorgegeben wird. 19 ist das erfindungsgemäße spezifische Drehmoment, d.h. der Drehmomentausgleichswert, der den beiden Dividierern 20, 21 für den Begrenzungssollwert Drehmoment/Begrenzungssollwert Maschinenstrom und Begrenzungssollwert Maschinenleistung/Begrenzungssollwert Maschinenstrom aufgegeben wird.

22 bezeichnet den Begrenzungssollwert Maschinenstrom ebenso wie 23 und 24, die einer Einrichtung 25 für die Minimumauswahl des Begrenzungssollwerts Maschinenstrom aufgegeben werden. 26 bezeichnet den Begrenzungssollwert Maschinenstrom an Drehzahlregler.

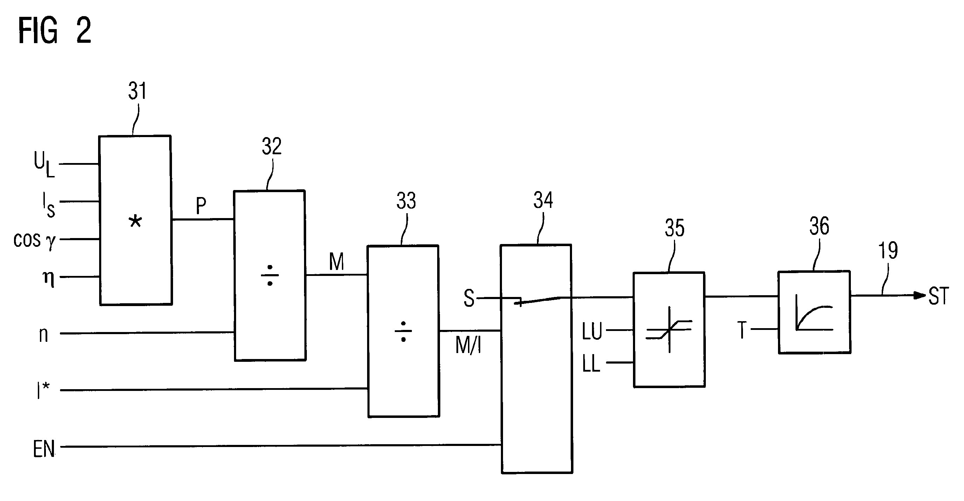

In FIGUR 2, in der der Einfluss der einzelnen Maschinengrößen auf die Drehmomentregelung wiedergegeben ist, bedeutet 31 den Multiplizierer für die Maschinenleistung in den in üblicher Weise die Spannung, der Strom, der Kosinus Phi und der Wirkungsgrad der Maschine eingegeben werden. 32 ist ein Drehmomentdividierer, dem die Drehzahl aufgegeben wird und 33 ein Dividierer, der das spezifische Drehmoment ermittelt, während 34 eine Freigabeeinheit für das spezifische Drehmoment angibt. 35 ist ein Begrenzer des spezifischen Drehmoments und 36 gibt die Glättungsfunktion des spezifischen Drehmoments an. 19 ist das Ausgangssignal für das spezifische Drehmoment.

Die FIGUREN 1 und 2 und die in ihnen verwendeten Abkürzungen und Symbol entsprechen dem üblichen Darstellungsschema von elektrischen Reglern. Sie sind daher für den Fachmann ohne weiteres verständlich.

Zusammenfassend ist festzustellen, dass der Vorteil dieser Erfindung ganz wesentlich darin liegt, dass mit einer einfachen und kostengünstigen Regelung über Softwarebausteine eine sehr teure Überdimensionierung der Antriebsanlage vermieden werden kann. Bei Schiffen z.B. wird die vertraglich vereinbarte Schiffsgeschwindigkeit bei einer ebenfalls vertraglich festgelegten Antriebsleistung gemessen. Es irritiert dabei, wenn sich während des Betriebs der Antriebsanlage die Betriebswerte der Maschinenleistung oder auch drehmomentabhängige Vorgänge der permanent erregten Synchronmaschine ändern. Es kommt nicht zu Leistungsschwankungen, die die vertraglich vereinbarten Größen als nicht erreicht erscheinen lassen.

Ein weiterer Vorteil dieser Erfindung liegt darin, dass die maximale Maschinenspannung US sich etwas reduziert, wenn z.B. bei Schiffsantrieben die permanent erregte Synchronmaschine an einer Begrenzung der Maschinenwirkleistung fährt. Die Ausgangsleerlaufspannung von dem Stromrichtertransformator kann um den Faktor reduziert werden, in dem sich auch die maximale Maschinenspannung US reduziert. Um den gleichen Faktor reduziert sich auch die Bauleistung des Stromrichtertransformators und damit sinken auch seine Kosten. Um den gleichen Faktor reduziert sich auch die Scheinleistung, die der Umrichter aus dem Bordnetz holt. Bei Schiffsantrieben wirkt sich das auch bei den Generatoren für die Stromerzeugung der Umrichter kostensenkend aus, weil die Generatoren weniger Blindleistung liefern müssen. Insgesamt werden also nicht nur die Kosten der elektrischen Maschine selbst, sondern auch die Kosten für die Komponenten für die Energieversorgung der Antriebsmaschine gesenkt. Es ergibt sich also ein Bündel von Vorteilen gegenüber den bisherigen, nicht mit dem Drehmomentausgleichswert gefahrenen, permanent erregten elektrischen Synchronmaschinen.

**Patentansprüche**

1. Verfahren zur Leistungsregelung von permanent erregten elektrischen Schiffsantriebsmaschinen mit vorgebbarer Drehzahl, in denen durch einen Maschinenstrom und einen durch Permanentmagnete erzeugten magnetischen Fluss ein Drehmoment erzeugt wird, das von der Stärke des magnetischen Flusses und der Größe des Maschinenstroms sowie einer Maschinenkonstante abhängt, wobei der Maschinenstrom und die Drehzahl der Maschine geregelt werden und wobei zur Berücksichtigung der gegebenen Temperaturabhängigkeit des von den Permanentmagneten erzeugten magnetischen Flusses zur Verbesserung der Leistungsregelung ein spezifischer Drehmomentausgleichswert verwendet wird, wobei der spezifische Drehmomentausgleichswert aus dem Maschinenstrom-Soll-Wert, der elektrischen Leistung, dem Wirkungsgrad und der Drehzahl als Hauptgrößen,fortlaufend durch Rechentechnik ermittelt wird.

2. Verfahren nach Anspruch 1,
**dadurch gekennzeichnet,**
**dass** über den Drehmomentausgleichswert ein innerer und ein äußerer Drehzahlregelkreis in einer Regeleinrichtung für die elektrische Maschine miteinander verknüpft werden.

3. Verfahren nach Anspruch 1 oder 2,
**dadurch gekennzeichnet,**
**dass** das Maschinendrehmoment durch gemessene Größen, z.B. einen Drehmoment-Ist-Wert oder den Maschinenfluss-Ist-Wert, geführt wird.

4. Einrichtung zur Durchführung des Verfahrens nach einem oder mehreren der vorhergehenden Ansprüche,
**dadurch gekennzeichnet,**
**dass** sie einen inneren und einen äußeren Drehzahlregelkreis aus Softwarebausteinen aufweist, die über den einstellbaren Drehmomentausgleichswert miteinander verbunden sind.

5. Einrichtung nach Anspruch 4,
**dadurch gekennzeichnet,**
**dass** der einstellbare Drehmomentausgleichswert nach vorgegebenen Maschinen- und Verwendungsparametern einstellbar ist, z.B. entsprechend der gewünschten Wirkleistung.

6. Einrichtung nach Anspruch 4 oder 5,
**dadurch gekennzeichnet,**
**dass** sie einen inneren Regelkreis mit einem Drehzahlregler mit den Regelgrößen Drehzahl-Soll-Wert vor Hochlaufgeber, Drehzahl-Soll-Wert nach Hochlaufgeber, Drehzahl-Ist-Wert und Maschinenstrom-Soll-Wert aufweist.

7. Einrichtung nach Anspruch 4, 5 oder 6,
**dadurch gekennzeichnet,**
**dass** sie einen äußeren Regelkreis mit den Regelgrößen Drehzahl-Ist-Wert, Begrenzung der Maschinenwirkleistung und Begrenzung des Maschinendrehmoments aufweist, wobei die Begrenzung der Maschinenwirkleistung und die Begrenzung des Maschinendrehmoments von extern gegebenen Größen oder von weiteren Regelgrößen, wie z.B. dem Drehzahl-Ist-Wert, geführt werden.

8. Einrichtung nach Anspruch 6,
**dadurch gekennzeichnet,**
**dass** der Hochlaufgeber eine Hochlaufgebernachführung aufweist.

9. Einrichtung nach einem oder mehreren der vorhergehenden Ansprüche, **dadurch gekennzeichnet,**
**dass** das Ausgangssignal des Drehzahlreglers der Maschinenstrom-Soll-Wert ist.

10. Verwendung der Einrichtung nach einem oder mehreren der Ansprüche 4 bis 9 zur Regelung eines elektrischen Ruderpropellermotors mit Permanenterregung.

**Claims**

1. Method for power regulation of electrical marine vessel propulsion machines with permanent-magnet excitation and using a predeterminable rotation speed, in which a torque is produced by a machine current and a magnetic flux produced by permanent magnets, which torque depends on the strength of the magnetic flux and the magnitude of the machine current as well as a machine constant, with the machine current and the rotation speed of the machine being regulated, and with a specific torque compensation value being used to take account of the given temperature dependency of the magnetic flux produced by the permanent magnet, in order to improve the power regulation, with the specific torque compensation value being determined from the machine current nominal value, from the electrical power, from the efficiency and from the rotation speed as major variables continuously by means of a computation technique.

2. Method according to Claim 1,
**characterized in that**
an inner and an outer rotation-speed control loop are linked to one another via the torque compensation value in a control device for the electrical machine.

3. Method according to Claim 1 or 2,
**characterized in that**
the machine torque is controlled by measured variables, for example a torque actual value or the machine flux actual value.

4. Device for carrying out the method according to one or more of the preceding claims,

**characterized in that**
the device has an inner and an outer rotation-speed control loop comprising software modules which are connected to one another via the adjustable torque compensation value.

5. Device according to Claim 4,
**characterized in that**
the adjustable torque compensation value can be set using predetermined machine and usage parameters, for example corresponding the desired real power.

6. Device according to Claim 4 or 5,
**characterized in that**
the device has an inner control loop with a rotation-speed regulator whose control variables are the rotation speed nominal value upstream of a run-up transmitter, the rotation-speed nominal value downstream from the run-up transmitter, the rotation speed actual value and the machine current nominal value.

7. Device according to Claim 4 or 5 or 6,
**characterized in that**
the device has an outer control loop whose control variables are the rotation speed actual value, a limit for the machine real power and a limit for the machine torque, with the limit for the machine real power and the limit for the machine torque being controlled by externally defined variables or by further control variables, for example the rotation speed actual value.

8. Device according to Claim 6,
**characterized in that**
the run-up transmitter has run-up transmitter readjustment.

9. Device according to one or more of the preceding claims,
**characterized in that**
the output signal from the rotation-speed regulator is the machine current nominal value.

10. Use of the device according to one or more of Claims 4 to 9 for regulation of an electrical steering propeller motor with permanent-magnet excitation.

## Revendications

1. Procédé pour la régulation de puissance de machines électriques de propulsion de bateau, à excitation permanente et avec vitesse de rotation pouvant être prescrite, dans lesquelles on produit par un courant de machine et par un flux magnétique produit par des aimants permanents un couple qui dépend de l'intensité du flux magnétique et de la grandeur du courant de machine ainsi que d'une constante de machine, le courant de machine et la vitesse de rotation de la machine étant régulés et, pour prendre en compte le fait que le flux magnétique produit par les aimants permanents dépend de la température afin d'améliorer la régulation de puissance, on utilise une valeur de compensation de couple spécifique, la valeur de compensation de couple spécifique étant déterminée en continu par une technique de calcul à partir de la valeur de consigne de courant de machine, de la puissance électrique, du rendement et de la vitesse de rotation comme grandeurs principales.

2. Procédé selon la revendication 1,
**caractérisé par le fait que**, par l'intermédiaire de la valeur de compensation de couple, on combine un circuit de régulation de vitesse de rotation interne et un circuit de régulation de vitesse de rotation externe dans un dispositif de régulation pour la machine électrique.

3. Procédé selon la revendication 1 ou 2,
**caractérisé par le fait que** le couple de machine est contrôlé par des grandeurs mesurées, par exemple une valeur réelle de couple ou la valeur réelle de flux de machine.

4. Dispositif pour la mise en oeuvre du procédé selon l'une ou plusieurs des revendications précédentes,
**caractérisé par le fait qu'**il comporte un circuit de régulation de vitesse de rotation interne et un circuit de régulation de vitesse de rotation externe qui sont constitués de composants logiciels qui sont reliées entre eux par l'intermédiaire de la valeur de compensation de couple réglable.

5. Dispositif selon la revendication 4,
**caractérisé par le fait que** la valeur de compensation de couple réglable est réglable selon des paramètres prédéterminés de machine et d'utilisation, par exemple selon la puissance active souhaitée.

6. Dispositif selon la revendication 4 ou 5,
**caractérisé par le fait qu'**il comporte un circuit de régulation interne ayant un régulateur de vitesse de rotation avec les grandeurs réglées valeur de consigne de vitesse de rotation avant le transmetteur de montée en régime, valeur de consigne de vitesse de rotation après le transmetteur de montée en régime, valeur réelle de vitesse de rotation et valeur de consigne de courant de machine.

7. Dispositif selon la revendication 4, 5 ou 6,
**caractérisé par le fait qu'**il comporte un circuit de régulation externe avec les grandeurs réglées valeur réelle de vitesse de rotation, limitation de la puissance active de machine et limitation du couple de machine, la limitation de la puissance active de machine et la limitation du couple de machine étant contrôlées par des grandeurs données de l'extérieur ou par d'autres grandeurs réglées, par exemple la valeur réelle de vitesse de rotation.

**8.** Dispositif selon la revendication 6, **caractérisé par le fait que** le transmetteur de montée en régime comporte un asservissement de transmetteur de montée en régime.

**9.** Dispositif selon l'une ou plusieurs des revendications précédentes, **caractérisé par le fait que** le signal de sortie du régulateur de vitesse de rotation est la valeur de consigne de courant de machine.

**10.** Utilisation du dispositif selon l'une ou plusieurs des revendications 4 à 9 pour la régulation d'un moteur d'hélice de gouvernail actif électrique à excitation permanente.

FIG 1

EP 1 648 082 B1

FIG 2

EP 1 648 082 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 10229700 B
- US 6592412 B

- DE 10011601 C2